# EUROPÄISCHE PATENTSCHRIFT

(11) **EP 1 812 723 B1**
(45) Veröffentlichungstag und Bekanntmachung des Hinweises auf die Patenterteilung: **10.09.2008**
(21) Anmeldenummer: 05800483.9
(22) Anmeldetag: 29.10.2005
(51) Int. Cl.: F16D 3/205, F16C 33/60

(54) **TRIPODE-ROLLE**
TRIPOD ROLLER
ROULEAU TRIPODE

(30) Priorität: 09.11.2004 DE 102004054267
(43) Veröffentlichungstag der Anmeldung: 01.08.2007
(73) Patentinhaber: Schaeffler KG, 91074 Herzogenaurach (DE); Ifa Technologies GmbH, 39332 Haldensleben (DE)
(72) Erfinder: OLSZEWSKI, Piotr, F-67500 Haguenau (FR); CRACKAU, Wolfgang, 39116 Magdeburg (DE)
(74) Vertreter: Blaumeier, Jörg
(86) Internationale Anmeldenummer: PCT/EP2005/011618
(87) Internationale Veröffentlichungsnummer: WO 2006/050833

(56) Entgegenhaltungen:
- DE-A1- 4 340 458
- FR-A- 2 738 881
- GB-A- 2 199 621
- US-A- 4 257 655
- US-B1- 6 478 682

## Beschreibung

### Gebiet der Erfindung

Die Erfindung betrifft eine Tripode-Rolle für ein Gleichlaufdrehgelenk in Tripodebauart, mit einem Innenring, einem Außenring und zwischen diesen angeordneten Wälzkörpern, wobei am Innenring und am Außenring zwei einander gegenüberliegende, eine axiale Bewegung der Wälzkörper in die eine Richtung begrenzende Ringschultern vorgesehen sind.

### Hintergrund der Erfindung

Eine derartige Tripode-Rolle beziehungsweise ein mit einer solchen aufgebautes Gleichlaufdrehgelenk ist z.B. aus EP 0 426 186 B1 bekannt. Derartige Gleichlaufdrehgelenke sind beispielsweise in allen Antriebswellen von vorderradgetriebenen Personenkraftwagen eingesetzt. Sie weisen ein drehbares Gelenkaußenteil mit drei umfangsverteilt angeordneten Laufbahneinrichtungen, die jeweils zwei parallel ausgerichtete, ebene Laufflächen aufweisen, sowie einen von dem Gelenkaußenteil umgriffenen Tripodestern, der drei umfangsverteilt radial ausgerichtete Zapfen aufweist, auf, wobei jeder der Zapfen im Innenring einer Tripode-Rolle aufgenommen ist.

Die Tripode-Rolle, die in EP 0 426 186 B1 beschrieben ist, zeigt einen Außenring und einen Innenring, zwischen denen die Wälzkörper angeordnet sind. Der Innenring weist an einem Ende einen radial nach außen vorspringenden integralen Ansatz auf, an dem der Außenring mit seiner ersten Stirnseite aufgelagert ist. Am gegenüberliegenden Ende der Rolleneinheit ist eine Scheibe und ein Sicherungsring angeordnet, über die die Rolleneinheit zusammengehalten wird. Die Scheibe sitzt außenseitig auf dem Innenring auf, an ihr liegt der Außenring mit seiner zweiten Stirnseite spielfrei auf. Der Sicherungsring ist in einer am Innenring ausgebildeten Nut aufgenommen und übergreift die Scheibe, so dass eine axiale Bewegung des Innenrings bezüglich des Außenrings nicht möglich ist. Die Wälzkörper, die zwischen Innenring und Außenring mit minimalen axialem Spiel aufgenommen sind, sind mit ihren Stirnseiten am Ansatz des Innenrings bzw. der Scheibe geführt. Diese mehrteilige Ausführung der Tripode-Rolle ist zwar zweckdienlich, gleichwohl sind neben den Wälzkörpern vier Teile erforderlich, was hinsichtlich der Montage der Rolle als auch im Hinblick auf die Gestehungskosten unvorteilhaft ist.

Ferner ist aus GB 2 199 621 A ein Wälzlager mit einem Innenring und einem Außenring bekannt, zwischen denen Wälzkörper aufgenommen sind. Zur Bildung einer die Wälzkörper fixierenden Schulter des Außenrings weist der Außenring eine zum Innenring hin offene Nut auf, in die ein mit einem Innengewinde versehener Ring eingesetzt ist. In diesen wiederum ist ein mit einem Außengewinde versehener Schulterring eingeschraubt, der in seiner Endstellung entsprechend gesichert wird.

### Zusammenfassung der Erfindung

Der Erfindung liegt das Problem zugrunde, eine vereinfacht aufgebaute Tripode-Rolle anzugeben, bei der eine axiale Bewegung der Wälzkörper begrenzt und gleichzeitig unter Verwendung nur weniger Bauteile die Rolle insgesamt gesichert ist.

Zur Lösung dieses Problems ist bei einer Tripode-Rolle der eingangs genannten Art erfindungsgemäß vorgesehen, dass einer der Ringe eine weitere Ringschulter zur Begrenzung der axialen Bewegung der Wälzkörper in die andere Richtung aufweist, während der andere Ring axial verlängert ist und eine umlaufende Ringnut aufweist, in der ein radial vorspringender, den einen Ring seitlich übergreifender Sicherungsring aufgenommen ist, wobei die Wälzkörper in einem Freiraum zwischen der Stirnseite der Wälzkörper und der Anlagefläche der gegenüberliegenden Ringschulter zwischen den beiden Ringschultern axial bewegbar sind.

Bei der erfindungsgemäßen Tripode-Rolle kommen neben den Wälzkörpern nur drei Bauteile zum Einsatz, nämlich der Innen- und der Außenring sowie der Sicherungsring. Eine axiale Bewegung wird über die beiden einander gegenüberliegenden Ringschultern, die radial nach außen vorspringend am Innenring beziehungsweise radial nach innen vorspringend am Außenring vorgesehen sind, realisiert. Die axiale Bewegung in die andere Richtung wird über eine weitere Ringschulter an einem der Ringe begrenzt, während die Fixierung der Rolle in ihrer Gesamtheit über den Sicherungsring erfolgt, der verhindert, dass der Innenring aus dem Außenring gezogen werden kann. Es ergibt sich damit vorteilhaft ein einfacher Aufbau, bei dem die Wälzlager sowohl axial gesichert sind, während gleichzeitig bei entsprechender Anordnung der Schultern sowie des Sicherungsrings eine geringe axiale Beweglichkeit des Innenrings gegeben ist.

Dabei kann die weitere Ringschulter am Außenring vorgesehen sein, während der Innenring axial verlängert ist und die nach außen offene Ringnut aufweist, in der der Sicherungsring angeordnet ist, der die Stirnseite des Außenrings übergreift. Alternativ kann die Ausführung auch umgekehrt sein, das heißt, die weitere Ringschulter ist am Innenring vorgesehen, sie springt radial nach außen vor, während der Außenring axial verlängert ist und die Ringnut, die an seiner Innenwand nach innen offen ausgebildet ist, mit dem Sicherungsring aufweist.

Um die Tripode-Rolle möglichst kompakt und in axialer Richtung kleinbauend auszuführen, ist es zweckmäßig, wenn die einander gegenüberliegenden Ringschultern randseitig am jeweiligen Ring vorgesehen sind.

Neben der Tripode-Rolle betrifft die Erfindung ferner ein Gleichlaufdrehgelenk in Tripodebauart, bestehend aus einem Gelenkaußenteil und einem Gelenkinnenteil, die über mehrere Tripode-Rollen der beschriebenen Art miteinander gekoppelt sind.

### Kurze Beschreibung der Zeichnungen

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine erfindungsgemäße Tripode-Rolle einer ersten Ausführungsform, und
- Fig. 2: eine erfindungsgemäße Tripode-Rolle einer zweiten Ausführungsform.

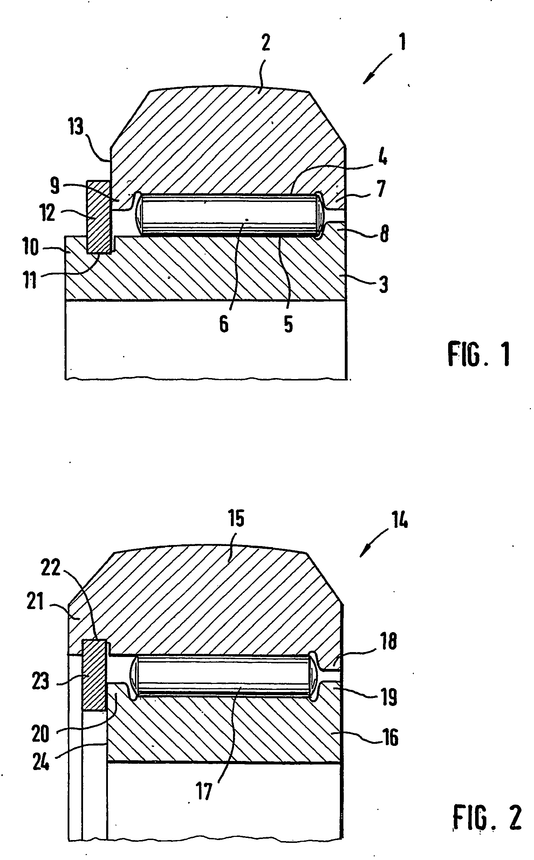

Fig. 1 zeigt in Form einer Teilschnittansicht eine erfindungsgemäße Tripode-Rolle 1, bestehend aus einem Außenring 2 und einem Innenring 3 sowie zwischen diesen aufgenommenen, auf entsprechenden Laufflächen 4, 5 laufenden Wälzkörpern 6 in Form von Nadeln. Die axiale Bewegung der Wälzkörper 6 wird - ausgehend von Fig. 1 - zur rechten Seite hin über zwei einander gegenüberliegende Ringschultern realisiert, wobei die eine Ringschulter 7 am Außenring 2 randseitig und radial nach innen vorspringend angeordnet ist, während die zweite Ringschulter 8 randseitig am Innenring 3, radial nach außen vorspringend vorgesehen ist. Beide Schultern sind etwas voneinander beabstandet. Ihre Innenkontur entspricht angenähert der balligen Stirnseite der Wälzkörper 6.

Die axiale Bewegbarkeit der Wälzkörper 6 zur - bezogen auf Fig. 1 - linken Seite hin wird über eine weitere Ringschulter 9, die randseitig am Außenring 2 radial nach innen vorspringend vorgesehen ist, begrenzt. Wie Fig. 1 zeigt, verbleibt ein gewisser Freiraum zwischen der Stirnseite der Wälzkörper 6 und der Anlagefläche der Ringschulter 9, so dass eine geringe axiale Versetzung der Wälzkörper 6 beziehungsweise damit auch des Innenrings 3 bezüglich des Außenrings 2 möglich ist.

Ersichtlich ist ferner, dass der Innenring 3 breiter als der Außenring ist, das heißt, er steht in axialer Richtung über den Außenring 2 hinaus. In diesem Überstandsbereich 10 ist eine Ringnut 11 ausgebildet, in der ein Sicherungsring 12 aufgenommen oder eingesprengt ist. Dieser steht radial nach außen ab und übergreift den Außenring 2 an seiner Randseite 13. Hierdurch wird die Tripode-Rolle insgesamt zusammengehalten. Denn eine mögliche Bewegung des Innenrings 3 bezüglich des Außenrings 2 ist in jedem Fall über die Wälzkörper 6, die an der einen oder anderen Ringschulter 7, 8, 9 anschlagen, begrenzt.

Zur Montage der Tripode-Rolle werden zunächst die Wälzkörper 6 in den Außenring 2 eingesetzt, wonach der Innenring 3 eingefädelt wird. Anschließend wird der Sicherungsring 12 in die Ringnut 11 eingeschnappt.

Fig. 2 zeigt eine alternative Ausführungsform einer erfindungsgemäßen Tripode-Rolle 14. Auch diese besteht aus einem Außenring 15 und einem Innenring 16 sowie zwischen diesen angeordneten Wälzkörpern 17 in Form der Nadeln. Wie in Fig. 2 rechts gezeigt, weist der Außenring eine Ringschulter 18 sowie der Innenring eine Ringschulter 19 auf, die randseitig einander gegenüberliegend angeordnet sind und die Wälzkörperbewegung begrenzen. Anders als bei der Ausführungsform gemäß Fig. 1 ist hier die weitere Ringschulter 20 am Innenring 16 vorgesehen, auch hier ist der Wälzkörper etwas kürzer als die beiden Ringschultern 19, 20 von einander beabstandet sind. Der Außenring 15 ist in axialer Richtung überstehend und weist im Überstandsbereich 21 eine Ringnut 22 auf, in der der Sicherungsring 23 eingeschnappt ist. Dieser übergreift die Stirnseite 24 des Innenrings 16. Auch hier ist die Rolle nach Setzen des Sicherungsrings 23 vollständig fixiert, die Bewegung der Wälzkörper 18 ist beidseits über die Ringschultern 18, 19, 20 begrenzt. Ein gewisses Spiel ist nach wie vor realisiert, das heißt, der Innenring 16 ist minimal bezüglich des Außenrings 15 beweglich.

### Bezugszahlen

- 1: Tripode-Rolle
- 2: Außenring
- 3: Innenring
- 4: Lauffläche
- 5: Lauffläche
- 6: Wälzkörper
- 7: Ringschulter
- 8: Ringschulter
- 9: Ringschulter
- 10: Überstandsbereich
- 11: Ringnut
- 12: Sicherungsring
- 13: Randseite
- 14: Tripode-Rolle
- 15: Außenring
- 16: Innenring
- 17: Wälzkörper
- 18: Ringschulter
- 19: Ringschulter
- 20: Ringschulter
- 21: Überstandsbereich
- 22: Ringnut
- 23.: Sicherungsring
- 24: Stirnseite

## Patentansprüche

1. Tripode-Rolle für ein Gleichlaufdrehgelenk in Tripodebauart, mit einem Innenring, einem Außenring und zwischen diesen angeordneten Wälzkörpern, wobei am Innenring (3, 16) und am Außenring (2, 15) zwei einander gegenüberliegende, eine axiale Bewegung der Wälzkörper (6, 17) in die eine Richtung begrenzende Ringschultern (7, 8, 18, 19) vorgesehen sind, **dadurch gekennzeichnet, dass** einer der Ringe (2, 16) eine weitere Ringschulter (9, 20) zur Begrenzung der axialen Bewegung der Wälzkörper (6, 17) in die andere Richtung aufweist, während der andere Ring (3, 15) axial verlängert ist und eine umlaufende Ringnut (11, 22) aufweist, in der ein radial vorspringender, den einen Ring (2, 16) seitlich übergreifender Sicherungsring (12, 23) aufgenommen ist, wobei die Wälzkörper in einem Freiraum zwischen der Stirnseite der Wälzkörper und der Anlagefläche der gegenüberliegenden Ringschulter zwischen den beiden Ringschultern (7, 8, 9, 18, 19, 20) axial bewegbar sind.

2. Tripode-Rolle nach Anspruch 1, **dadurch gekennzeichnet, dass** die weitere Ringschulter (9) am Außenring (2) vorgesehen ist, und der Innenring (3) axial verlängert ist und die Ringnut (11) mit dem Sicherungsring (12) aufweist.

3. Tripode-Rolle nach Anspruch 1, **dadurch gekennzeichnet, dass** die weitere Ringschulter (20) am Innenring (16) vorgesehen ist, und der Außenring (15) axial verlängert ist und die Ringnut (22) mit dem Sicherungsring (23) aufweist.

4. Tripode-Rolle nach einem der vorangehenden Ansprüche, **dadurch gekennzeichnet, dass** die einander gegenüberliegenden Ringschultern (7, 8, 18, 19) randseitig am jeweiligen Ring (2, 3, 15, 16) vorgesehen sind.

5. Gleichlaufdrehgelenk in Tripodebauart, bestehend aus einem Gelenkaußenteil und einem Gelenkinnenteil, die über mehrere Tripode-Rollen nach einem der Ansprüche 1 bis 4 miteinander gekoppelt sind.

## Claims

1. Tripod roller for a parallel running pivotal joint of tripod construction, having an inner ring, an outer ring and roll bodies disposed between these, wherein on the inner ring (3, 16) and the outer ring (2, 15) two opposite annular shoulders (7, 8, 18,19) limiting axial movement of the roll bodes (6, 17) in one direction are provided, **characterised in that** one of the rings (2, 16) has a further annular shoulder (9, 20) for limiting the axial movement of the roll bodies (6, 17) in the other direction, whilst the other ring (3, 15) is extended axially and has a continuous annular groove (11, 22), in which a radially projecting circlip (12, 23) engaging laterally over one of the rings (2, 16) is received, the roll bodies being axially movable in a space between the end face of the roll bodies and the contact face of the opposite annular shoulder between the two annular shoulders (7, 8, 9, 18, 19, 20).

2. Tripod roller according to claim 1, **characterised in that** the further annular shoulder (9) is provided on the outer ring (2), and the inner ring (3) is extended axially and has the annular groove (11) with the circlip (12).

3. Tripod roller according to claim 1, **characterised in that** the further annular shoulder (20) is provided on the inner ring (16), and the outer ring (15) is extended axially and has the annular groove (22) with the circlip (23).

4. Tripod roller according to one of the preceding claims, **characterised in that** the mutually opposite annular shoulders (7, 8, 18, 19) are provided on the edge of the respective ring (2, 3, 15, 16).

5. Parallel running pivotal joint with tripod construction, consisting of a joint outer part and a joint inner part, which are coupled together via plural tripod rolls according to one of claims 1 to 4.

## Revendications

1. Galet de tripode pour un joint homocinétique du type tripode, comportant une bague intérieure, une bague extérieure et des corps de roulement disposés entre celles-ci, deux épaulements annulaires (7, 8, 18, 19), disposés face à face et limitant un mouvement axial des corps de roulement (6, 17) dans un sens, étant prévus sur la bague intérieure (3, 16) et sur la bague extérieure (2, 15), **caractérisé en ce que** l'une des bagues (2, 16) comporte un épaulement annulaire (9, 20) supplémentaire destiné à limiter le mouvement axial des corps de roulement (6, 17) dans l'autre sens, tandis que l'autre bague (3, 15) est prolongée dans la direction axiale et comporte une rainure annulaire (11, 22) périphérique, dans laquelle est logé un circlips (12, 23) formant une saillie radiale et s'engageant latéralement sur l'une des bagues (2, 16), les corps de roulement étant mobiles dans la direction axiale entre les deux épaulements annulaires (7, 8, 9, 18, 19, 20) dans un dégagement entre la face frontale des corps de roulement et la surface d'appui de l'épaulement annulaire situé en face.

2. Galet de tripode selon la revendication 1, **caractérisé en ce que** l'épaulement annulaire (9) supplémentaire est prévu sur la bague extérieure (2), et la bague intérieure (3) est prolongée dans la direction axiale et comporte la rainure annulaire (11) avec le circlips (12).

3. Galet de tripode selon la revendication 1, **caractérisé en ce que** l'épaulement annulaire (20) supplémentaire est prévu sur la bague intérieure (16), et la bague extérieure (15) est prolongée dans la direction axiale et comporte la rainure annulaire (22) avec le circlips (23).

4. Galet de tripode selon l'une quelconque des revendications précédentes, **caractérisé en ce que** les épaulements annulaires (7, 8, 18, 19), situés face à face, sont prévus sur le bord de la bague (2, 3, 15, 16) respective.

5. Joint homocinétique du type tripode, formé par une partie de joint extérieure et une partie de joint intérieure, qui sont couplées l'une à l'autre par l'intermédiaire de plusieurs galets de tripode selon l'une quelconque des revendications 1 à 4.
